# EUROPEAN PATENT SPECIFICATION

(11) **EP 2 814 612 B1**
(45) Date of publication and mention of the grant of the patent: **23.01.2019**
(21) Application number: 13707019.9
(22) Date of filing: 08.02.2013
(51) Int. Cl.: B01L 3/02

(54) **ELECTRONIC PIPETTE**
ELEKTRONISCHE PIPETTE
PIPETTE ÉLECTRONIQUE

(30) Priority: 13.02.2012 FI 20125149
(43) Date of publication of application: 24.12.2014
(73) Proprietor: Thermo Fisher Scientific Oy, 01620 Vantaa (FI)
(72) Inventor: TELIMAA, Juha, FI-04430 Järvenpää (FI); LIND, Mikael, FI-00840 Helsinki (FI)
(74) Representative: Berggren Oy, Helsinki & Oulu
(86) International application number: PCT/FI2013/050142
(87) International publication number: WO 2013/121097

(56) References cited:
- WO-A1-2012/045416
- WO-A2-02/00344
- US-A1- 2005 118 069
- US-A1- 2009 074 622

## Description

### Field of technology

The present invention relates to a pipette intended for use in the dosage of liquids and comprising an electronically operating control system with a user interface comprising an electronic display.

### Technological background

Pipettes used for liquid dosage in laboratories comprise a piston movable in a cylinder for aspiration of liquid into a tip container connected with the cylinder. The volume is usually adjustable. There are also electronic pipettes whose piston is actuated by means of an electric motor and a control system associated with it. However, there are also electronic pipettes whose pistons are actuated by manual force and which comprise an electronic display only. Electronic pipettes have a user interface for selection of the desired pipette function (e.g. direct or reverse pipetting), setting of the volume and for giving commands for performing operations. The user interface has the necessary switches for input of the necessary settings and performance of the functions. The user interface is connected to a display, by means of which the volume and other necessary data can be displayed. The display can also show menus allowing data input in the control system.

Examples of known electronic pipettes are disclosed in publications WO 2005079989 and WO 2005079987, for example.

Patent publication US 8,033,188 discloses an electronic pipette, which comprises menu driven software for controlling the information displayed on the user interface display, for inputting information to program the pipettor and for controlling the operation of the pipettor. In this solution the user interface also comprises a circular touch pad for navigating the user interface display and for operating the pipette.

WO 0200344 A2 discloses a hand-held pipette, which can comprise a touch sensitive display as an input for a user interface.

### Summary of the invention

An electronic controllable pipette in accordance with the present invention is equipped with one or more touch screens by which the pipetting operations of the pipette are operated. The pipette comprises a piston actuated in a cylinder by a motor, a control system for carrying out pipette operations, and a user interface for operating the pipette. The touch screen comprises at least one touching or pressing area for operating at least one of the following pipetting operations of the pipette: ejecting the tip of the pipette, filling of the tip container, dispensing from the tip container, and mixing action of the pipette. The size and/or location of the touching or pressing areas within the touch screens for different pipetting operations are adjustable.

The term "touch screen" within context of this description means an electronic visual display that displays information and that can detect the presence and location of a touch within the display area.

The touch screens may be used as modifiable function keys or buttons by which the pipetting operations of pipette are controlled. The touch screens may be equipped with pre-programmed icons for different operations of the pipette, whereby the icons define the active pressing areas of the touch screen for activating the related functions of the pipette. These icons may be moved to different places on the touch screen and/or on different touch screens of the pipette. The size of the icons, or the active area of the touch screen for receiving a touch to activate selected operation, may also be adjustable. Some areas of the touch screen or whole touch screen may also be adjusted to be inactive, so they may be used as a support surfaces when operating the pipette.

Examples for pipetting operations to be covered with pre-programmable icons include ejecting the tip of the pipette, filling of the tip container, dispensing the tip container, and mixing action of the pipette, for example.

The touch screens may also be equipped with sliding functions, whereby for example the pipetting motion can be carried out by moving finger along the surface of the touch screen, which corresponds to a similar type of motion in manual pipettes. In this sliding function the piston of the pipette follows the movement of the finger in real time. Alternatively this sliding function can be used to activate pipette's mixing function, for example.

The touch screens of the electronic pipette in accordance with the present invention may also be curved, so that they may follow the curved surfaces of the pipette.

With an electronic pipette in accordance with the present invention it is possible to change locations of areas registering pressing or touching for operating the pipette to be suitable for different users and for different hands, thereby minimizing the stress caused to the hand when operating the pipette. The present invention also makes it possible to easily switch the locations of the pressing or touching areas, for example for different fingers, during the use of the pipette, which makes it possible to minimize further the stresses caused by pipetting.

The electronic pipette in accordance with the present invention may also be equipped with a programmable feature for monitoring the physical stresses caused by the use of the pipette, and based on the monitoring, for suggesting modifications or changes to the placements of pressing or touching areas in order to lower the physical stresses. This programmable feature is advantageously part of the control software of the electronic pipette.

The present invention also allows a method for operating an electronic pipette, wherein at least one of the following pipetting operations of the pipette is carried out by touching or pressing a touch screen, which touch screen is part of the user interface of the pipette and comprises at least one touching or pressing area for operating the pipetting operations of the pipette: ejecting the tip of the pipette, filling of the tip container, dispensing from the tip container, and mixing action of the pipette. The size and/or location of the touching or pressing areas within the touch screens for different pipetting operations are adjustable.

Further, the present invention also allows a use of a touch screen with at least one touching or pressing area as a part of a user interface of an electronic pipette for operating at least one of the following pipetting operations of the pipette: ejecting the tip of the pipette, filling of the tip container, dispensing from the tip container, and mixing action of the pipette. The size and/or location of the touching or pressing areas within the touch screens for different pipetting operations are adjustable.

The features of the electronic pipette in accordance with the present invention are presented more precisely in the independent claim 1. A method for operating an electronic pipette in accordance with the present invention is described in the independent claim 9. The invention also relates to a use of a touch screen in an electronic pipette as described in independent claim 10. The dependent claims define further advantageous features and embodiments of the invention.

### Brief description of the figures

Exemplifying embodiments of the invention and its advantages are explained in greater detail below in the sense of an example and with reference to the accompanying drawings, where
figure 1 shows an electronic pipette in accordance with the present invention,
figure 2 shows the main touch screen areas of the pipette of figure 1,
figure 3 shows a functional diagram of an electronic pipette in accordance with the present invention,
figures 4A-4F shows an example of operating an electronic pipette in accordance with the present invention,
figures 5A-5E shows an example of changing positions of operations in setting mode of an electronic pipette in accordance with the present invention, and
figure 6 shows examples of programmable icons for an electronic pipette in accordance with the present invention.

### Detailed description of the embodiments

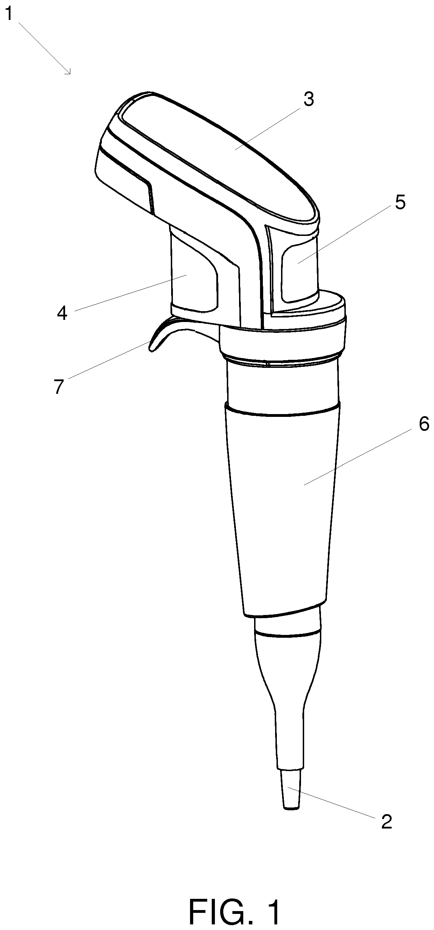

Figure 1 shows an example of an electronic pipette 1 in accordance with the present invention. When the pipette 1 is used, a tip container (not shown) is attached to the lower end 2 on the pipette. Inside the pipette 1 is located a piston movable in a cylinder in order to aspire liquid into the tip container. The piston of the pipette 1 is actuated by electric motor located within the pipette. The pipette 1 is operated with a control system that have a user interface comprising, in this example, three touch screens 3, 4 and 5.

During the use of the pipette 1, the pipette is gripped with hand from handle portion 6, which handle portion also comprises at its upper end a finger support 7. The touch screens 4 can be operated with the index finger of the gripping hand and the touch screens 3 and 5 can be operated with the thumb of the gripping hand. Alternatively the touch screens 3, 4 and 5 can be operated with the fingers of the other hand.

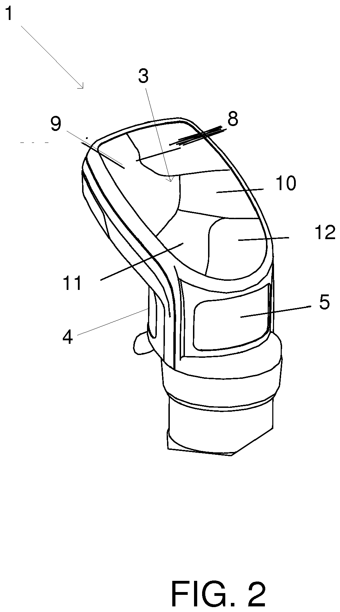

As can be seen from figure 2, the touch screen 3 on the pipette 1 is divided to several areas 8-12 each of which can be set to either purely present information, register pressing or touching and carry out certain action, or combination of these two. Further, each of the areas 8-12, as well as the touch screens 4 and 5 or parts or these touch screens, can also be set to be inactive, for example to be used as support surfaces.

Touch screens 3, 4 and 5 or parts of them can also be set to register sliding functions, whereby for example the pipetting motion can be carried out by moving finger along the surface of the touch screen. In this sliding function the piston of the pipette follows the movement of the finger in real time. Alternatively this sliding function can be used to activate pipette's mixing function, for example.

Touch screens 3, 4 and 5 also comprise pre-programmed icons for different pipetting operations, such as ejecting the tip of the pipette, filling of the tip container, dispensing the tip container, and mixing action of the pipette, for example. These icons advantageously identify the operation of the pressing or touching area as well as the active area related to this action.

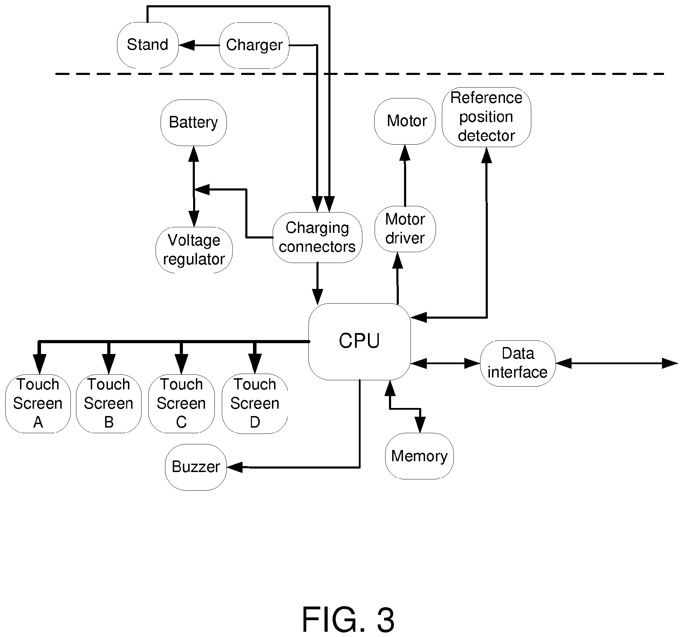

Figure 3 shows an example of a functional diagram of an electronic pipette, like the pipette 1 of figure 1. The operations of the pipette are controlled with a central processing unit (CPU), which is equipped with memory for storing pre-programmed operations and functions. The user gives commands to the CPU through touch screens A-D of which in this example there are four. The CPU is supplied with operating power by a battery and a voltage regulator, which can be recharged with a changer through charging connections when the pipette is placed in its stand. The CPU of the pipette can also be connected to external databases through data interface. The CPU receives information from and controls the pipette's piston reference position detector. In accordance with instructions received from the user through the touch screens A-D, the CPU controls the motor of the pipette through a motor driver. The dashed line on figure 3 presents boundary surface between the pipette itself and the stand of the pipette in which the pipette is placed when not in use.

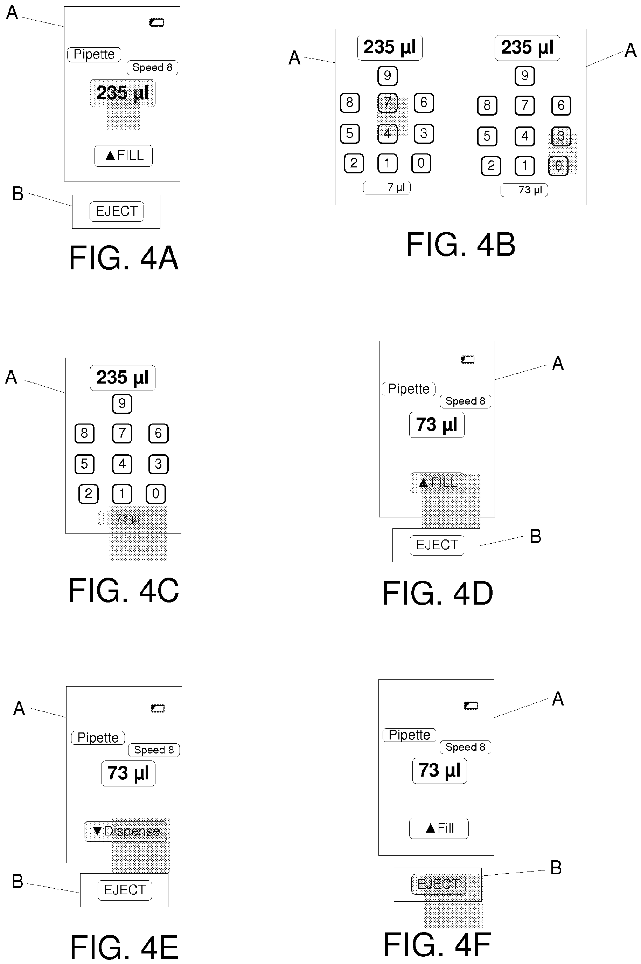

Figures 4A-4F shows an example of operating an electronic pipette in accordance with the present invention. In this example the touch screens of the pipette are used to change the pipetting volume.

In this operation the user first touches the area of touch screen A showing the present pipetting volume, as shown in figure 4A. This action activates the touch screen A to change its view to a numeric touchpad, where the present pipetting volume (235 µl) is shown near the upper edge of the touch screen A over the numeric touchpad, and below the numeric touchpad is an area for a new pipetting volume. By touching the numbers of the numeric touchpad the user inputs the new pipetting volume, as is shown in figure 4B. After correct new pipetting volume has been typed, the user accepts the new pipetting volume by touching the area showing the newly input pipetting volume, as shown in figure 4C. After the new pipetting volume is accepted, the touch screen A returns to the previous view where the pipetting volume has now changed to the new pipetting volume (73 µl), as shown in figure 4D. By touching or pressing the area of the touch pad A identified with word "FILL", as shown in figure 4D, the user fills the tip of the pipette with set pipetting volume of 73 µl. Since the tip of the pipette now contains liquid, the area of the touch screen A previously identified with word "FILL" is changed to be identified with word "Dispense" by the control system of the pipette automatically and the operation activated by touching or pressing that area is changed correspondingly. Now, when the area with word "Dispense" is touched or pressed by the user, as is shown in figure 4E, the liquid volume of 73 µl, which previously was filled in the tip of the pipette, is dispensed from the tip of the pipette. In order to remove the used tip of the pipette, the user touches or presses a separate touch screen B, as shown in figure 4F, which touch screen B is set to activate the tip ejecting operation. The user is informed of this operation with a word "EJECT" located in the touch screen B.

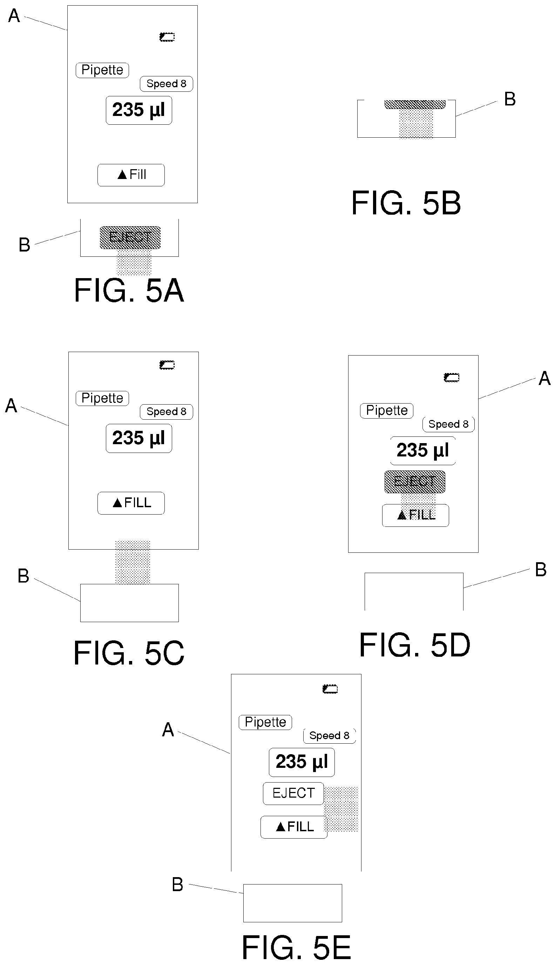

Figures 5A-5E shows an example of changing positions of operations in setting mode of an electronic pipette in accordance with the present invention.

When pipette is in setting mode, the selected "EJECT" tab in touch screen B can be moved by activating it with a touch, as is shown in figure 5A. After activating the selected tab it can then be moved out of the area of the touch screen B by moving finger along the touch screen B to the edge of the touch screen, as is shown in figure 5B. After the selected "EJECT" tab is moved out of the touch screen B, a touch screen where the tab is to be moved, in this case touch screen A, is activated by touching or pressing the touch screen, as is shown in figure 5C. Then the selected "EJECT" tab can be dragged to a selected location within touch screen A, as is shown in figure 5D. By releasing the tab a new position for it within the touch screen B is set, as shown in figure 5E.

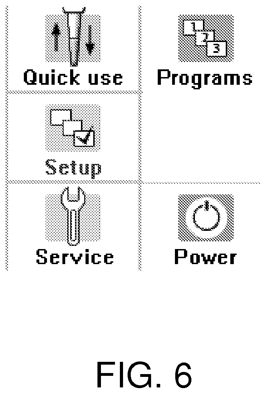

Figure 6 shows examples with pre-programmable icons for operations of an electronic pipette in accordance with the present invention. As can be seen from the figure, these icons advantageously also contain clarifying words relating to the operations activated by touching the icon in question in the touch screen of the pipette.

## Claims

1. An electronic pipette (1) comprising
- a piston actuated in a cylinder by a motor,
- a control system for carrying out pipette operations, and
- a user interface for operating the pipette,
wherein the user interface comprises at least one touch screen (3, 4, 5) for operating the pipetting operations of the pipette, which touch screen comprises at least one touching or pressing area (8, 9, 10, 11, 12)
**characterized in that** the at least one touching or pressing area (8, 9, 10, 11, 12) is adapted to operate at least one of the following pipetting operations of the pipette (1): ejecting a tip of the pipette, filling of the tip container, dispensing from the tip container, and mixing action of the pipette, and **in that** the size and/or location of the touching or pressing areas (8, 9, 10, 11, 12) within the touch screens (3, 4, 5) for different pipetting operations are adjustable.

2. An electronic pipette (1) according to claim 1, **characterized in that** the user interface comprises 2-4 touch screens (3, 4, 5).

3. An electronic pipette (1) according to claim 1 or 2, **characterized** that the touching or pressing areas (8, 9, 10, 11, 12) of different pipetting operations are transferrable between different touch screens (3, 4, 5).

4. An electronic pipette (1) according to any of claims 1-3, **characterized in that** the touching or pressing areas (8, 9, 10, 11, 12) for different pipetting operations within the touch screens (3, 4, 5) are identifiable by pre-programmed icons.

5. An electronic pipette (1) according to any of claims 1-4, **characterized in that** the touch screen (3, 4, 5) comprises sliding functions or operations that are operated by moving finger along the surface of the touch screen.

6. An electronic pipette (1) according to any of claims 1-5, **characterized in that** some parts of the touch screen (3, 4, 5) and/or some touch screens are adjustable to be inactive.

7. An electronic pipette (1) according to any of claims 1-6, **characterized in that** the user interface of the pipette (1) comprises a programmable feature for monitoring the use of pipetting operations and for suggesting modifications for locations of pressing or touching areas (8, 9, 10, 11, 12).

8. An electronic pipette (1) according to any of claims 2-7, **characterized in that** at least some of the touch screens (3, 4, 5) are curved and follow the curved surface of the pipette (1).

9. Method for operating an electronic pipette (1), **characterized in that** at least one of the following pipetting operations of the pipette (1) is carried out by touching or pressing a touch screen (3, 4, 5), which touch screen is part of the user interface of the pipette and comprises at least one touching or pressing area (8, 9, 10, 11, 12) for operating the pipetting operations of the pipette (1): ejecting the tip of the pipette, filling of the tip container, dispensing from the tip container, and mixing action of the pipette, wherein the size and/or location of the touching or pressing areas (8, 9, 10, 11, 12) within the touch screens (3, 4, 5) for different pipetting operations are adjustable.

10. Use of a touch screen (3, 4, 5) with at least one touching or pressing area (8, 9, 10, 11, 12) as a part of a user interface of an electronic pipette (1) for operating at least one of the following pipetting operations of the pipette: ejecting the tip of the pipette, filling of the tip container, dispensing from the tip container, and mixing action of the pipette, wherein the size and/or location of the touching or pressing areas (8, 9, 10, 11, 12) within the touch screens (3, 4, 5) for different pipetting operations are adjustable.

## Patentansprüche

1. Elektronische Pipette (1), die umfasst:
- einen Kolben, der in einem Zylinder durch einen Motor betätigt wird,
- ein Steuersystem zum Durchführen von Pipettenvorgängen, und
- eine Benutzeroberfläche zum Bedienen der Pipette,
wobei die Benutzeroberfläche zumindest einen berührungsempfindlichen Bildschirm (3, 4, 5) zum Durchführen der Pipettiervorgänge der Pipette umfasst, wobei der berührungsempfindliche Bildschirm zumindest einen Berührungs- oder Drückbereich (8, 9, 10, 11, 12) umfasst,
**dadurch gekennzeichnet, dass** der zumindest eine Berührungs- oder Drückbereich (8, 9, 10, 11, 12) so ausgelegt ist, dass er zumindest einen der folgenden Pipettiervorgänge der Pipette (1) durchführt:
Ausstoßen einer Spitze der Pipette, Füllen des Spitzenbehälters, Ausgeben aus dem Spitzenbehälter und Mischaktion der Pipette, und **dass** die Größe und/oder der Standort der Berührungs- oder Drückbereiche (8, 9, 10, 11, 12) innerhalb der berührungsempfindlichen Bildschirme (3, 4, 5) für verschiedene Pipettiervorgänge anpassbar ist bzw. sind.

2. Elektronische Pipette (1) nach Anspruch 1, **dadurch gekennzeichnet, dass** die Benutzeroberfläche 2 bis 4 berührungsempfindliche Bildschirme (3, 4, 5) umfasst.

3. Elektronische Pipette (1) nach Anspruch 1 oder 2, **dadurch gekennzeichnet, dass** die Berührungs- oder Drückbereiche (8, 9, 10, 11, 12) unterschiedlicher Pipettiervorgänge zwischen unterschiedlichen berührungsempfindlichen Bildschirmen (3, 4, 5) übertragbar sind.

4. Elektronische Pipette (1) nach einem der Ansprüche 1 bis 3, **dadurch gekennzeichnet, dass** die Berührungs- oder Drückbereiche (8, 9, 10, 11, 12) für unterschiedliche Pipettiervorgänge innerhalb der berührungsempfindlichen Bildschirme (3, 4, 5) durch vorprogrammierte Symbole identifizierbar sind.

5. Elektronische Pipette (1) nach einem der Ansprüche 1 bis 4, **dadurch gekennzeichnet, dass** der berührungsempfindliche Bildschirm (3, 4, 5) Schiebefunktionen oder -vorgänge umfasst, die durch Bewegen des Fingers entlang der Oberfläche des berührungsempfindlichen Bildschirms durchgeführt werden.

6. Elektronische Pipette (1) nach einem der Ansprüche 1 bis 5, **dadurch gekennzeichnet, dass** manche Teile des berührungsempfindlichen Bildschirms (3, 4, 5) und/oder manche berührungsempfindliche Bildschirme auf inaktiv einstellbar sind.

7. Elektronische Pipette (1) nach einem der Ansprüche 1 bis 6, **dadurch gekennzeichnet, dass** die Benutzeroberfläche der Pipette (1) ein programmierbares Merkmal zum Überwachen der Verwendung von Pipettiervorgängen und zum Vorschlagen von Modifikationen für Standorte von Druck- oder Berührungsbereichen (8, 9, 10, 11, 12) umfasst.

8. Elektronische Pipette (1) nach einem der Ansprüche 2 bis 7, **dadurch gekennzeichnet, dass** zumindest manche der berührungsempfindlichen Bildschirme (3, 4, 5) gekrümmt sind und der gekrümmten Oberfläche der Pipette (1) folgen.

9. Verfahren zum Bedienen einer elektronischen Pipette (1), **dadurch gekennzeichnet, dass** zumindest eines der folgenden Pipettiervorgänge der Pipette (1) durch Berühren eines berührungsempfindlichen Bildschirms (3, 4, 5) oder Drücken auf diesen durchgeführt wird, wobei der berührungsempfindliche Bildschirm Teil der Benutzeroberfläche der Pipette ist und zumindest einen Berührungs- oder Drückbereich (8, 9, 10, 11, 12) zum Durchführen der Pipettiervorgänge der Pipette (1) umfasst: Ausstoßen einer Spitze der Pipette, Füllen des Spitzenbehälters, Ausgeben aus dem Spitzenbehälter und Mischaktion der Pipette, wobei die Größe und/oder der Standort der Berührungs- oder Drückbereiche (8, 9, 10, 11, 12) innerhalb der berührungsempfindlichen Bildschirme (3, 4, 5) für verschiedene Pipettiervorgänge anpassbar ist bzw. sind.

10. Verwendung eines berührungsempfindlichen Bildschirms (3, 4, 5) mit zumindest einem Berührungs- oder Drückbereich (8, 9, 10, 11, 12) als Teil einer Benutzeroberfläche einer elektronischen Pipette (1) zum Durchführen zumindest eines der folgenden Pipettiervorgänge der Pipette: Ausstoßen einer Spitze der Pipette, Füllen des Spitzenbehälters, Ausgeben aus dem Spitzenbehälter und Mischaktion der Pipette, wobei die Größe und/oder der Standort der Berührungs- oder Drückbereiche (8, 9, 10, 11, 12) innerhalb der berührungsempfindlichen Bildschirme (3, 4, 5) für verschiedene Pipettiervorgänge anpassbar ist bzw. sind.

## Revendications

1. Pipette électronique (1) comprenant
- un piston actionné dans un cylindre par un moteur,
- un système de commande destiné à réaliser des opérations de pipetage, et
- une interface utilisateur destinée à faire fonctionner la pipette,
l'interface utilisateur comprenant au moins un écran tactile (3, 4, 5) destiné à réaliser les opérations de pipetage de la pipette, lequel écran tactile comprend au moins une zone de contact ou de pression (8, 9, 10, 11, 12)
**caractérisée en ce que** l'au moins une zone de contact ou de pression (8, 9, 10, 11, 12) est adaptée pour réaliser l'une au moins des opérations de pipetage suivantes de la pipette (1) : l'éjection d'une pointe de la pipette, le remplissage du récipient de pointe, la distribution à partir du récipient de pointe, et l'action de mélange de la pipette, et **en ce que** la taille et/ou l'emplacement des zones de contact ou de pression (8, 9, 10, 11, 12) situées à l'intérieur des écrans tactiles (3, 4, 5) et destinées à différentes opérations de pipetage peuvent être réglés.

2. Pipette électronique (1) selon la revendication 1, **caractérisée en ce que** l'interface utilisateur comprend 2 à 4 écrans tactiles (3, 4, 5).

3. Pipette électronique (1) selon la revendication 1 ou 2, **caractérisée en ce que** les zones de contact ou de pression (8, 9, 10, 11, 12) de différentes opérations de pipetage sont transférables entre différents écrans tactiles (3, 4, 5).

4. Pipette électronique (1) selon l'une quelconque des revendications 1 à 3, **caractérisée en ce que** les zones de contact ou de pression (8, 9, 10, 11, 12) destinées à différentes opérations de pipetage à l'intérieur des écrans tactiles (3, 4, 5) sont identifiables par des icônes préprogrammés.

5. Pipette électronique (1) selon l'une quelconque des revendications 1 à 4, **caractérisée en ce que** l'écran tactile (3, 4, 5) comprend des fonctions ou des opérations de glissement qui sont réalisées par le déplacement d'un doigt le long de la surface de l'écran tactile.

6. Pipette électronique (1) selon l'une quelconque des revendications 1 à 5, **caractérisée en ce que** certaines parties de l'écran tactile (3, 4, 5) et/ou certains écrans tactiles peuvent être réglés de façon à être inactifs.

7. Pipette électronique (1) selon l'une quelconque des revendications 1 à 6, **caractérisée en ce que** l'interface utilisateur de la pipette (1) comprend un élément caractéristique programmable destiné à surveiller l'utilisation d'opérations de pipetage et à suggérer des modifications pour des emplacements de zones de contact ou de pression (8, 9, 10, 11, 12).

8. Pipette électronique (1) selon l'une quelconque des revendications 2 à 7, **caractérisée en ce qu'**au moins certains des écrans tactiles (3, 4, 5) sont incurvés et suivent la surface incurvée de la pipette (1).

9. Procédé de fonctionnement d'une pipette électronique (1), **caractérisé en ce que** l'une au moins des opérations de pipetage suivantes de la pipette (1) est réalisée par contact ou pression au niveau d'un écran tactile (3, 4, 5), lequel écran tactile fait partie de l'interface utilisateur de la pipette et comprend au moins une zone de contact ou de pression (8, 9, 10, 11, 12) destinées à réaliser les opérations de pipetage de la pipette (1) : l'éjection de la pointe de la pipette, le remplissage du récipient de pointe, la distribution à partir du récipient de pointe, et l'action de mélange de la pipette, la taille et/ou l'emplacement des zones de contact ou de pression (8, 9, 10, 11, 12) situées à l'intérieur des écrans tactiles (3, 4, 5) et destinées à différentes opérations de pipetage pouvant être réglés.

10. Utilisation d'un écran tactile (3, 4, 5) comprenant au moins une zone de contact ou de pression (8, 9, 10, 11, 12) faisant partie d'une interface utilisateur d'une pipette électronique (1) pour réaliser l'une au moins des opérations de pipetage suivantes de la pipette : l'éjection de la pointe de la pipette, le remplissage du récipient de pointe, la distribution à partir du récipient de pointe, et l'action de mélange de la pipette, la taille et/ou l'emplacement des zones de contact ou de pression (8, 9, 10, 11, 12) situées à l'intérieur des écrans tactiles (3, 4, 5) et destinées à différentes opérations de pipetage pouvant être réglés.
